# EUROPEAN PATENT SPECIFICATION

(11) **EP 3 874 942 B1**
(45) Date of publication and mention of the grant of the patent: **03.12.2025**
(21) Application number: 21160815.3
(22) Date of filing: 04.03.2021
(51) Int. Cl.: A01K 1/06, A61D 3/00

(54) **ANIMAL URGING ASSEMBLY**
VORRICHTUNG ZUM SPERREN VON TIEREN
ASSEMBLAGE D'ENGAGEMENT POUR ANIMAUX

(30) Priority: 04.03.2020 GB 202003122
(43) Date of publication of application: 08.09.2021
(73) Proprietor: F. Klucznik & Son Limited, Adderley Green Stoke-on-Trent, Staffordshire ST3 5BW (GB)
(72) Inventor: ALLEN, Robert Edward, Stoke-on-Trent, Staffordshire ST3 5BW (GB)
(74) Representative: Swindell & Pearson Limited

(56) References cited:
- US-A- 4 702 200
- US-A- 5 282 441
- US-A1- 2018 055 004

## Description

This invention concerns an animal urging assembly, and also **an** animal handling apparatus.

Animal handling apparatus such as cattle crushes are widely used to restrain an animal whilst various inspections or procedures are carried out on the animal. A door arrangement is often provided on such apparatus which can be held in a partially closed position against an animal's neck to permit access to the animal's head, with the animal head projecting beyond the apparatus. It is sometimes required to maintain the head in a raised position, and a device used for this is a "chin scoop" comprising an engagement member selectively locatable beneath the chin of an animal to maintain the head in a raised position. A number of shortcomings are often encountered with existing chin scoops.
US5282441A discloses a large animal handling shute, comprising flaps that may be rotated from a stowed position to an in-use position, to support the body of the animal.
US4702200 A discloses a head-holder for a livestock chute. The head-holder comprises a head catch that is rotatable between a disengaged and engaged position.
US 2018/055004 A1 discloses (abstract) a livestock head holder featuring a top holding member, a bottom holding member and an intermediate link connecting same. An operating lever connected to the bottom holding member so that downward pulling of the operating lever performs a closing stroke of the head holder that swings both holding members into place against the animal's neck. A lock and release mechanism automatically blocks the linkage from performing a reverse opening stroke that withdraws the holding members away from one another under raising of the operating lever. The operating lever is arranged to release the locking action during initial raising of lever to enable completion of the opening stroke, thereby using the same lever for all opening, closing and unlocking functions.

According to a first aspect of the invention there is provided an animal urging assembly according to claim 1, the assembly including an engagement member selectively engageable with an animal, the assembly being configured to selectively move the engagement member between an out of use position wherein the engagement member extends at least generally downwardly, to an in use position which is above the out of use position, and with the engagement member extending at least generally transversely, the assembly being configured such that as it moves the engagement member upwardly from the out of use position to the in use position, the engagement member is automatically pivotally moved from extending generally downwardly to extending at least generally transversely, wherein the assembly comprises a pair of spaced guide members and a guideway, the guide members being selectively movable along the guideway so as to move the engagement member between the out of use and in use positions, such that as the guide members move between the out of use and in use positions, their relative alignment changes to cause the pivotal movement of the engagement member, wherein the assembly is configured such that in the in use position the guide members are spaced at least generally one above the other, whilst in the out of use position the guide members are spaced at least generally transversely from each other.

The guideway may have an upward generally vertically aligned part and a lower part which also extends transversely.

The guideway lower part may be profiled and may have a fulcrum part in which a lower one of the guide members can remain while the other upper guide member pivotally moves therearound to cause at least part of the pivotal movement of the engagement member.

The guideway lower part may include an upper surface against which the upper guide member engages, and a lower surface against which the lower guide member engages. The fulcrum part may be provided in the lower surface, and the guideway upper part may extend upwardly above the fulcrum part.

The engagement member may extend from a bracket member.

The assembly may include a single movement provider connected to the bracket member, wherein the single movement provider is configured to provide the movement that causes the engagement member to move upwardly out of the out of use position and causes the engagement member to automatically pivotally move from extending downwardly to extending at least generally transversely to be in the in use position.

The movement provider may be in the form of a hydraulic cylinder. The movement provider may be in the form of an electric actuator. The movement provider may be configured to move substantially just in a vertical direction.

The engagement member may connect to a pivot.

The guide members may be provided on a guide element. The guide element may be connected to the pivot.

The engagement member, pivot and guide element may be arranged to rotate together.

The engagement member, pivot and guide element may be arranged to rotate relative to the bracket member.

The bracket member may be arranged to only move in a substantially vertical direction.

The assembly may comprise a vertical slot. The vertical slot is configured to receive part of the pivot to guide the pivot when it moves vertically.

The assembly may comprise a front plate and a back plate.

The back plate may comprise the guideway.

The front plate may comprise the vertical slot.

The pivot is offset from the guide members to enable the guide members to move transversely in the lower part of the guideway whilst the pivot moves vertically in the vertical slot.

The assembly is arranged so that the engagement member simultaneously rotates and moves vertically during at least part of the vertical movement of the engagement member and pivot provided by the movement provider.

The assembly is arranged so that the vertical movement of the movement provider is translated into vertical and rotational movement of the engagement member.

The guide members may be in the form of rotatable members, which may be wheels, movable along the guideway.

According to a further aspect of the invention there is provided an animal handling apparatus according to claim 12.

The animal urging assembly may be provided on the outside of the door arrangement. The door arrangement may comprise a pair of doors, which may be slidably movable, and the animal urging assembly may be provided on the outside of a one of the doors, and may be configured not to extend transversely from the door when in the out of use position.

The animal handling apparatus may comprise an additional animal urging assembly according to the previous paragraphs mounted on the openable door arrangement, such that the engagement member of the additional animal urging assembly is extendible when in an in use position across the gap provided when the openable door arrangement is partially closed.

The engagement member of the animal urging apparatus may be configured to engage an animal's head/neck from below when in the in use position and the engagement member of the additional animal urging apparatus may be configured to engage the animal's head/neck from above when in the in use position.

According to some, but not necessarily all, examples, there is provided an animal urging assembly, the assembly including an engagement member selectively engageable with an animal, the assembly being configured to selectively move the engagement member between an out of use position wherein the engagement member extends downwardly, to an in use position which is above the out of use position, and with the engagement member extending transversely, the assembly being configured such that as it moves the engagement member upwardly from the out of use position to the in use position, the engagement member is automatically pivotally moved from extending downwardly to extending transversely.

According to some, but not necessarily all, examples, there is provided an animal urging assembly, the assembly including an engagement member selectively engageable with an animal, the assembly being configured to selectively move the engagement member between an out of use position to an in use position, the in use position being above the out of use position, and wherein the engagement member extends transversely to a greater extent when in the in use position compared to the out of use position, the assembly being configured such that as it moves the engagement member upwardly from the out of use position to the in use position, the engagement member is automatically pivotally moved to increase its transverse extension.

An embodiment of the present invention will now be described by way of example only and with reference to the accompanying drawings, in which:-
Fig. 1 is a diagrammatic perspective view of animal handling apparatus according to the invention with an animal urging assembly according to the invention in an out of use position, and with doors of the animal urging assembly fully open;
Fig. 2 is a similar view to Fig. 1 but with the doors of the animal handling apparatus partially closed;
Fig. 3 is a similar view to Fig. 2 but with the animal urging assembly in an in use position and illustrating an animal in the apparatus;

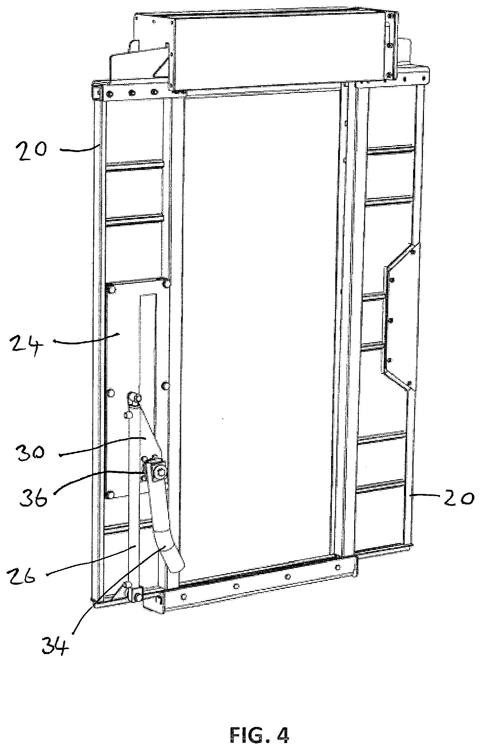

Fig. 4 is a similar view to Fig. 1 but of just the door arrangement of the animal handling apparatus;
Fig. 5A illustrates part of the animal urging assembly;
Fig. 5B illustrates part of the animal urging assembly;
Fig. 5C illustrates part of the animal urging assembly;
Fig. 6 is a diagrammatic view of part of the animal urging assembly in exploded form;
Fig. 7 illustrates part of the animal urging assembly;
Fig. 8 illustrates part of the animal urging assembly;
Fig. 9 illustrates part of the animal urging assembly;
Fig. 10 is a diagrammatic front view of an animal urging assembly according to the invention in an out of use position;
Fig. 11 is a sectional view along the line B-B of Fig. 10;
Fig. 12 is a diagrammatic rear view of part of the animal urging assembly;
Figs. 13 and 14 are respectively front and rear views of the animal urging assembly of Fig. 1 in an out of use position; and

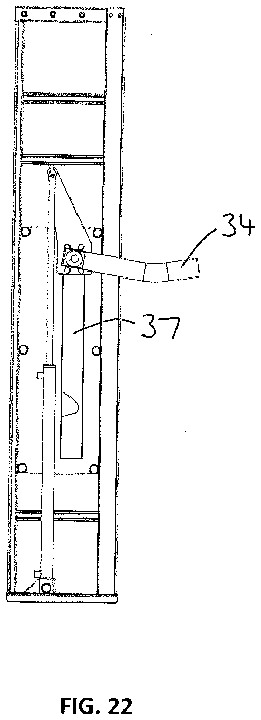

Figs. 15, 16, 17, 18, 19, 20, 21 and 22 are respectively similar views to Fig. 14 sequentially showing the animal urging apparatus moving from the out of use position to the in use position and the guide members moving vertically up the upper part of the guideway.

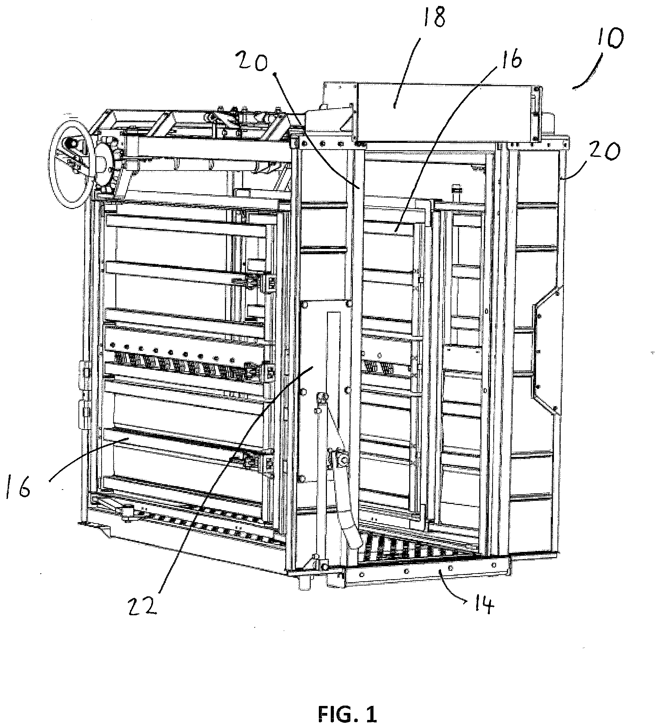

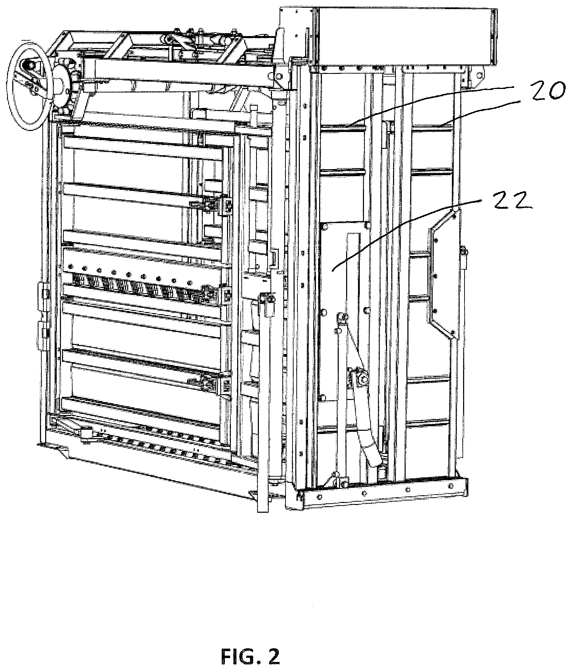

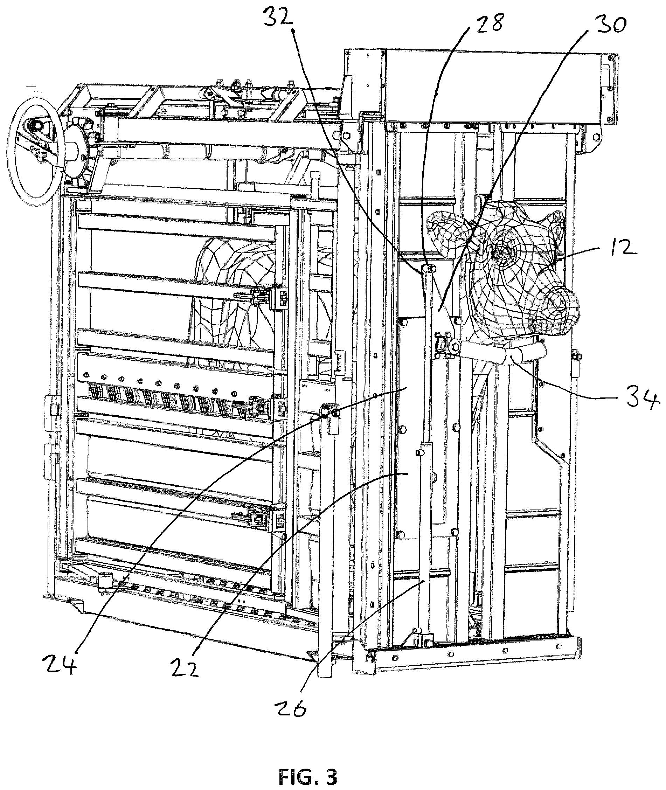

Figs. 1 to 3 of the drawings show animal handling apparatus 10 suitable for use with cattle such as the cow 12 shown in Fig. 3. The apparatus 10 comprises a base 14 with upstanding side walls 16 interconnected at their upper ends. A door opening arrangement 18 is provided at the front end as shown, comprising first and second slidably movable doors 20 which can be fully open as shown in Fig. 1, in a partially closed condition as shown in Figs. 2 and 3, or a fully closed condition, not shown. In the partially closed condition an animal such as the cow 12 may have their head protruding through between the doors 20, with the doors 20 engaging on their neck to retain the cow 12 in position with their head accessible. In some, but not necessarily all, examples, the animal handling apparatus 10 may be arranged such that as the cow 12 moves forwards the doors 20 are urged to the partially closed condition.

It may be required to maintain the cow's 12 head in a raised position, and the apparatus includes an animal urging assembly 22 according to the invention in the form of a "chin scoop". Figs. 1 and 2 show the animal urging assembly 22 in an out of use position, whilst Fig. 3 shows the animal urging assembly 22 in an in use condition.

The animal urging assembly 22 is mounted on the outside of a first of the doors 20, and as can be seen in an out of use condition the animal urging assembly is wholly located against the door 20.

The assembly 22 includes a frame 24 mounted to the door 20 and a movement provider in the form of a vertically aligned hydraulic cylinder 26 which engages against the base of the door 20. The upper end 28 of the cylinder 26 is mounted to a bracket member 30 at one end 32 of the bracket member 30. An engagement member 34 is mounted to the bracket member 30 at an opposite end 36 to the mounting of the hydraulic cylinder 26. The engagement member 34 comprises a gently upwardly cranked bar engageable beneath the chin of a cow 12 as shown in Fig. 3.

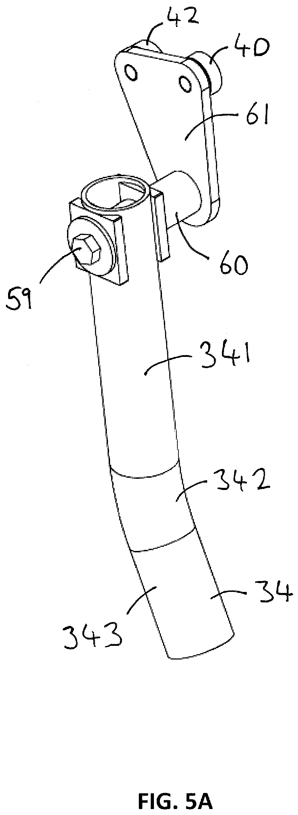

Fig. 5A illustrates the engagement member 34 connected to a pivot 60. The engagement member 34 is attached to the pivot 60 by bolt 59. The pivot 60 is connected to a guiding element 61.

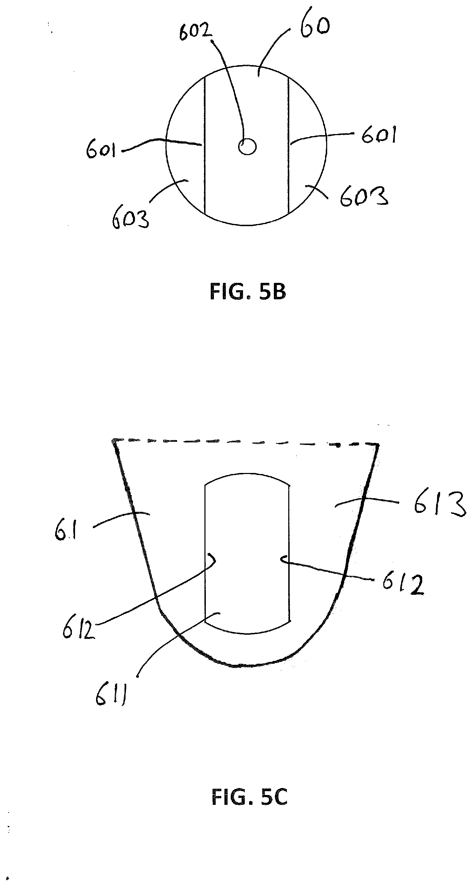

Fig. 5B illustrates the end of the pivot 60 which connects to the guiding element 61. The pivot 60 has machined facets 601 in its end that interconnect with the guiding element 61 by mating with a correspondingly shaped aperture 611 in the guiding element 61 as illustrated in Fig. 5C which illustrates part of the guiding element 61 which the pivot 60 connects to. The aperture 611 has facets 612 which engage against the facets 601 of the pivot 60 to prevent relative rotational movement between the pivot 60 and the guiding element 61. To secure the pivot 60 to the guiding element 61, the end of the pivot 60 has a hole 602 which is internally threaded, and a screw can be screwed into the end of the pivot 60, with a washer trapped below the head of the screw. The washer engages against the surface 613 of the guiding element 61 when the screw is screwed in tightly into the end of the pivot 60. The washer has a diameter such that its diameter cannot fit through the aperture 611. The machined facets of the pivot 60 protrude from shoulders 603 so that the guiding element 61 cannot slide along the remaining length of the pivot 60.

The guiding element 61 has two guiding members 40, 42 in the form of wheels. The engagement member 34, the pivot 60 and the guiding element 61 are fixed together so that when the guiding element 61 is rotated, so does the pivot 60 and the engagement member 34. Therefore the engagement member 34, the pivot 60 and the guiding element 61 do not rotate relative to each other as they are fixed together.

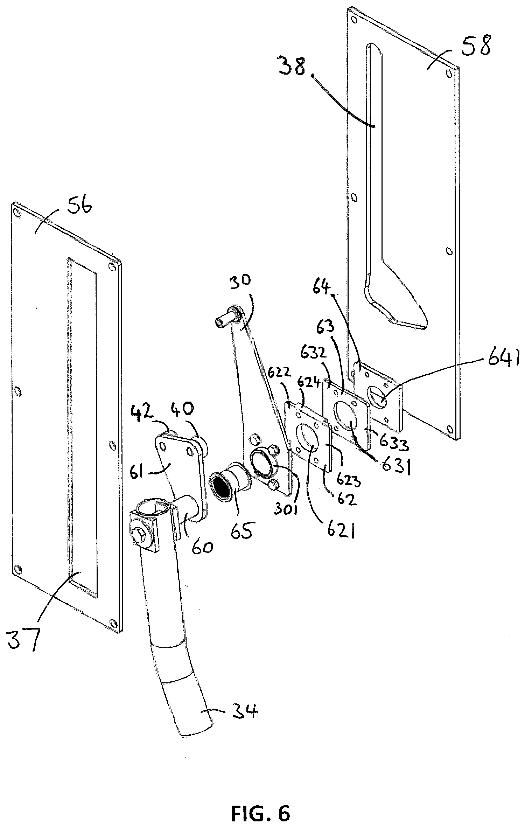

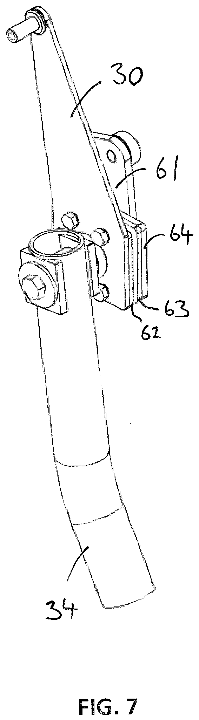

Fig. 6 illustrates an exploded view of part of the assembly 22, with engagement member 34 connected to pivot 60 and guiding element 61. The assembly 22 additionally has a front plate 56 with a vertical slot 37, a back plate 58, polymer plates 62, 63, steel plate 64, rotating enabler 65 and bracket member 30. Rotating enabler 65 fits over pivot 60. The bracket member 30 has a tube/boss 301, and the polymer plates 62, 63 and steel plate 64 each have a central bore 621, 631, 641. The tube/boss 301 of the bracket member 30 and the central bores 621, 631, 641 of the polymer plates 62, 63 and the steel plate 64 fit over the rotating enabler 65. The bracket member 30, the rotating enabler 65, the polymer plates 62, 63 and steel plate 64 all fit over the pivot, between the engagement member 34 and the guiding element 61, as illustrated in Fig. 7.

The pivot 60 can rotate whilst within the rotating enabler 65, and the engagement member 34 and the guiding element 61 will also rotate with the pivot 60 because of the connection between the pivot 60, the engagement member 34 and the guiding element 61. The exterior surface of the rotating enabler 65, which faces the boss/tube 301 of the bracket member 30 and the central bores 621, 631, 641 of the polymer plates 62, 63 and the steel plate 64 does not rotate with the pivot 60, and so the bracket member 30, the polymer plates 62, 63 and steel plate 64, which are fitted over the rotating enabler 65, will not rotate with the pivot 60.

Steel plate 64 has four threaded holes and its large central bore 641. Polymer plates 62, 63 each have four mounting holes in the same pattern as the four threaded holes of steel plate 64, and also each have a central bore 621, 631 which is larger than the central bore 641 of the steel plate 64. Polymer plate 62 has a vertical flange 622, 623 on either side of a central step 624, the step 624 being the same depth as the depth of the front plate 56. Bracket member 30 also has four bolt holes in the same pattern as the four holes in each of the polymer plates 62, 63, and also has its large boss/tube 301 that provides a pivot point for the rotating enabler 65. The rotating enabler 65 in this example is two flanged plain bearings, positioned back to back. The two bearings sit inside the boss/tube 301 of the bracket member 30, as well as the large bore 641 in steel plate 64. The boss/tube 301 of the bracket member 30 fits inside the central bores 621, 631 of the polymer plates 62, 63. The polymer plates 62, 63, the steel plate 64 and the bracket member 30 are held together by four bolts running through the four holes in each of the polymer plates 62, 63, the steel plate 64 and the bracket member 30. The four bolts pass through slot 37.

The polymer plates 62, 63, are sandwiched between the bracket member 30 and the steel plate 64. The polymer plates 62, 63 create a sliding bearing when held together with the front plate 57 in position between the polymer plates 62, 63. The step 624 of polymer plate 62 fits within the slot 37. The flanges 622, 623 and step 624 of polymer plate 62 and the flanges 632, 633 of polymer plate 63 prevent any fore and aft movement, allowing only vertical movement within the slot 37.

The rotating enabler 65 sits inside the boss/tube 301 of the bracket member 30, and the boss/tube 301 sits inside the sandwich between the bracket member 30 and the steel plate 64, which allows the pivot 60 to move vertically up and down in the slot 37.

In Fig. 6, the back plate 58 has a guideway 38 in the form of a profiled opening along which the two guiding members 40, 42 are rotatingly movable.

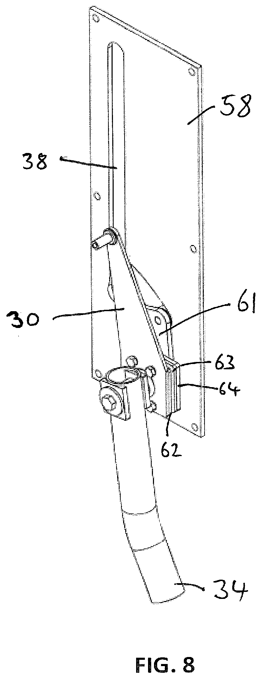

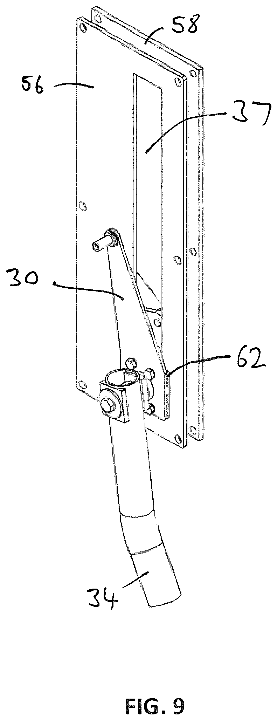

Fig. 8 illustrates part of the assembly 22, and illustrates the two guiding members 40, 42 in the guideway 38 of the back plate 58. The flanges of the polymer plates 62, 63 and the sandwiched components which are bolted together prevent the guiding element 61 from coming into contact with the back plate 58 when the front plate 56 is in position between the polymer plates 62, 63 and bolted to the back plate 58. The flanges of the polymer plates 62, 63 also prevent any fore and aft movement which could otherwise cause the guiding element 61 coming into contact with the back plate 58. The gap between polymer plates 62 and 63 is where the front plate 56 is positioned, as shown in Fig. 9.

Fig. 9 illustrates part of the assembly 22. As can be seen in Fig. 9, the engagement member 34, the bracket member 30 and part of the polymer plate 62 are situated in front of the front plate 56. Part of the pivot 60 between the polymer plate 62 and the next polymer plate 63 is the part of the pivot 60 which is located within the vertical slot 37.

The polymer plates 62, 63, are provided in this example to stop rubbing between metal parts of the assembly 22 as the bracket member 30 and guiding element 61 move vertically, and also as the guiding element 61 rotates, and also allows the pivot 60 to slide up and down within vertical slot 37. The polymer plates 62, 63 may be made of, for example, High Density Polyethylene (HDPE).

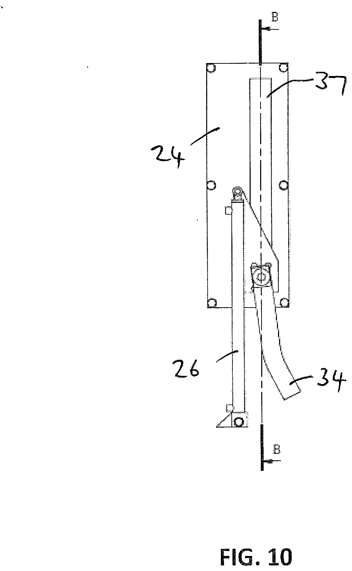

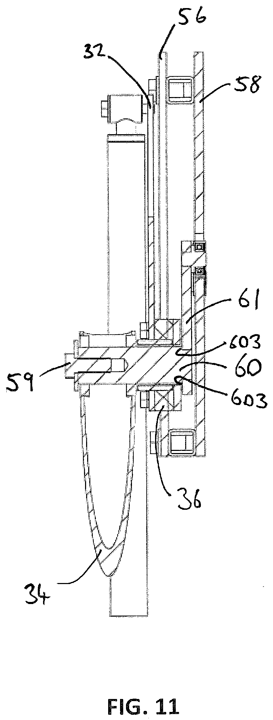

Fig. 10 illustrates a front view of the assembly 22, and Fig. 11 illustrates a sectional view along the line B-B of Fig. 10. As can be seen in Fig. 11, front plate 56 and back plate 58 are bolted together a set distance apart. Part of the pivot 60 extends through the front plate 56, which is through the vertical slot 37 (not shown in Fig. 10). When the hydraulic cylinder moves to provide vertical movement, the connection of the hydraulic cylinder at end 32 of the bracket member 30 causes vertical movement of the bracket member 30. As the bracket member 30 moves vertically, the profile of the guideway 38 causes the pivot 60 to rotate, due to the profiled guideway's interaction with guide members 40, 42. As the pivot also moves vertically due to the vertical movement of the bracket member 30, this creates rotary and vertical motion of the pivot 60, and thus causes rotary and vertical motion of the engagement member 34.

Line B-B also illustrates the y-axis of the assembly 22, which is parallel to slot 37 and the upper part 44 of guideway 38. As can be seen in Fig. 10, in this example the engagement member 34 is extending at least generally downwardly in the out of use position, where the downwards direction is parallel to the y-axis of the assembly 22 and is in the direction starting from the upper end 28 of the movement provider 26 towards the opposite end of the movement provider 26. When the engagement member 34 is in the in use position, it extends at least generally transversely, where the transverse direction is parallel to the x-axis of the assembly 22.

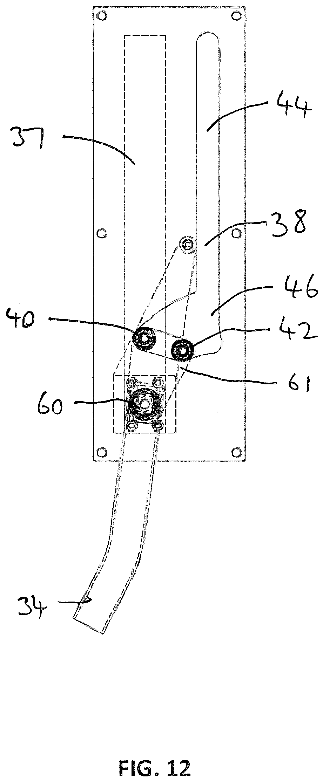

Fig. 12 illustrates a rear view of part of the assembly 22. Although they would not be visible from the rear, the pivot 60 and vertical slot 37 are illustrated in dashed lines to show their position relative to the guide members 40, 42 and the guideway 38. The pivot 60 is offset from the guide members 40, 42 to enable the guide members to move transversely in the lower part of the guideway 38 whilst the pivot 60 moves vertically in the vertical slot 37. This happens because the pivot 60 and the guide element 61 cannot rotate relative to one another, i.e. they are fixed together, and so when the pivot 60 moves vertically, this will cause the guide members 40, 42 to move to the right side (as shown in Fig. 12) of the lower part 46 of the guideway 38. This will be discussed in more detail below.

The guideway 38 opening comprises an upper vertically extending part 44 along which the guide members 40, 42 are movable, and a lower profiled part 46. The lower profiled part 46 is in the form of a wider profiled opening with an inclined upper surface 48 leading from an apex 50 spaced transversely from the upper part 44, to the upper part 44. The opening 38 has a bottom surface 52 extending initially downwardly from the apex 50, then upwardly, and leading to a rounded recess which forms a fulcrum part 54. The guideway opening 38 is intended to provide required movement of the guide member 40, 42, as will be hereinafter described.

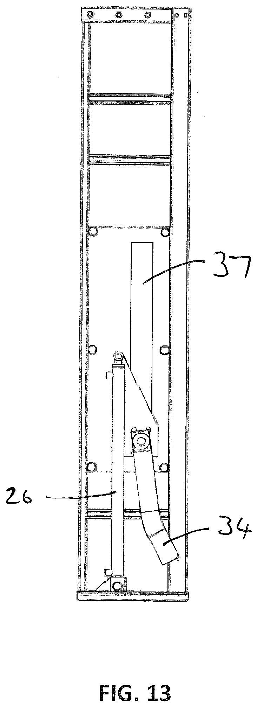

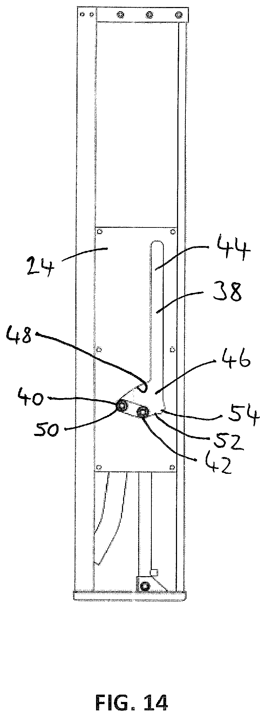

In operation in an out of use position as shown in Figs. 13 and 14, the upper guide member 40 rests in the apex 50, with the lower guide member 42 locating in the connection between the downwardly and upwardly extending surfaces of the bottom surface 52 of the profiled opening 38.

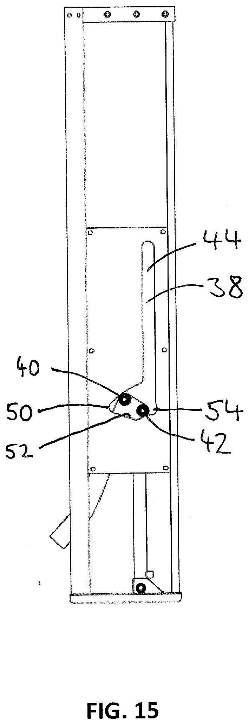

As the hydraulic cylinder 26 is activated this urges the bracket member 30 and pivot 60 upwardly which causes the upper guide member 40 to move against the upper surface 48 of the opening, whilst the lower guide member 42 moves over the bottom surface 52 hence moving the engagement member 34 laterally and rotating it to a small degree (see Fig. 15).

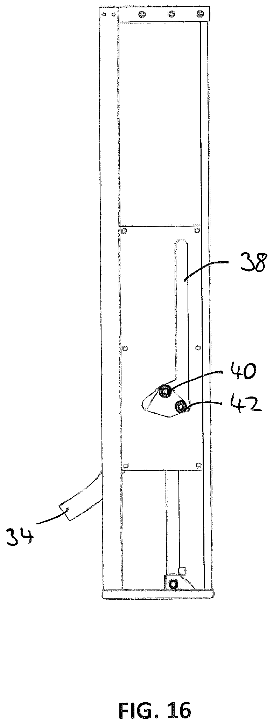

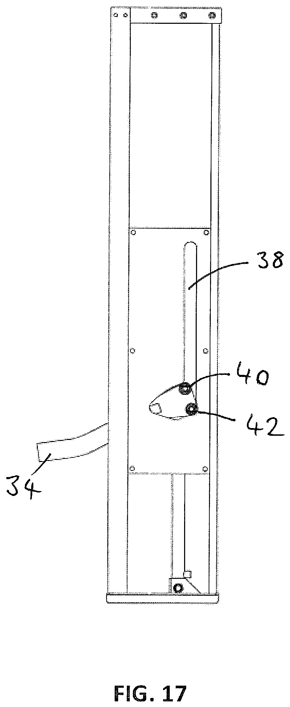

Further movement causes the lower guide member 42 to enter the fulcrum part 54 of the opening and for the guiding element 61 to rotate therearound as the upper guide member 40 moves further against the upper surface 48 of the opening (see Figs. 16 and 17).

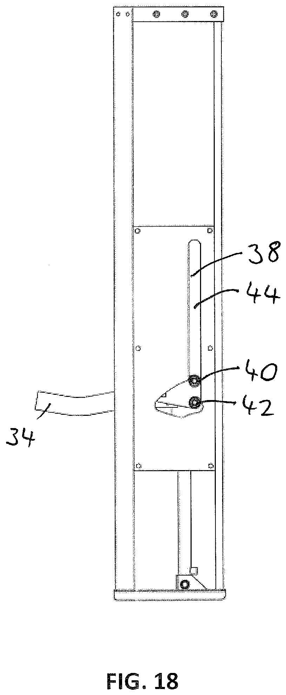

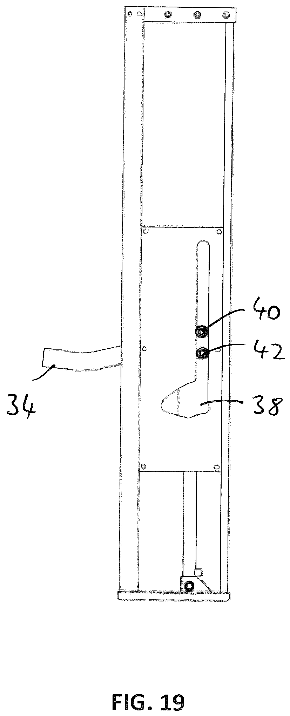

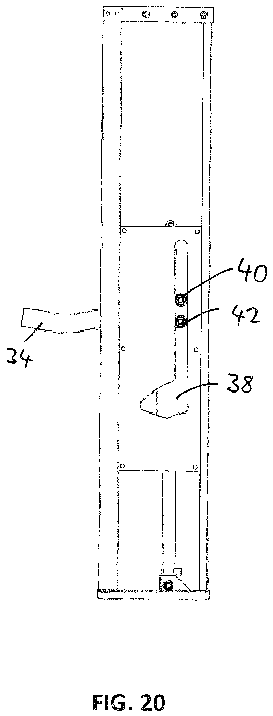

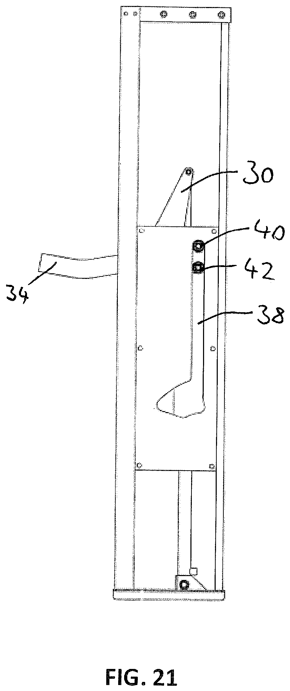

Eventually the upper guide member 40 enters the bottom of the upper part 44 of the guideway as shown in Fig. 18, at which point the engagement member 34 will be extending laterally and is in an in use position for the animal 12. Further upward movement of the hydraulic cylinder 26 causes the engagement member 34 to move upwardly in the same alignment as shown in Figs. 19 to 21. Unless the animal's head is in the way, the engagement member 34 will continue to moves upwards until the upper guide member 40 reaches the top end of the upper part 44 of the guideway.

The engagement member 34 can be moved to an out of use position before releasing an animal, following opposite steps to those described above, until the guide members 40, 42 reach the position shown in Figs. 13 and 14.

There is thus described an animal urging assembly, and also animal handling apparatus including such an assembly, which uses only a single movement provider, in this instance a hydraulic cylinder, to provide the vertical and pivotal movement of the engagement member in a single motion. Therefore in use an assembly will relatively gently urge an animal's head to a required position as the engagement member moves to the in use position.

In other examples another type of single movement provider may be used, for example an electric actuator.

Using a single movement provider to provide the vertical and pivotal movement of the engagement member in a single motion compared to using multiple movement providers to provide the vertical and pivotal movement separately provides easier maintenance of the animal urging assembly, reduces the risk of faults occurring and also provides smoother, easier operation of the engagement member from the out of use position to the in use position. It is also more economical to use a single movement provider compared to using two or more movement providers as less parts are required. In examples where the single movement provider is a hydraulic cylinder, having a single movement provider also reduces the hydraulic flow rate that needs to be supplied to the animal urging assembly. In examples where the single movement provider is an electric actuator, having a single movement provider reduces circuit complexity.

The apparatus can be manufactured for long term essentially maintenance free operation.

It is to be realised that a wide range of modifications may be made without departing from the scope of the invention defined in the appended claims. For instance a different movement provider could be used. The guideway could be provided differently, and with different guide members.

An additional animal urging assembly which is identical or similar to the animal urging assembly 22 could be provided which acts from above the animal so that the engagement member of the additional animal urging assembly acts on the back of the animal's head/neck. This restricts upwards movement of the animal's head.

The additional animal urging assembly may comprise any of the features described above for the animal urging assembly 22. If the additional animal urging assembly is provided on the same door 20 as the first animal urging assembly 22, the additional animal urging assembly is inverted (i.e. rotated about its x-axis compared to the animal urging assembly 22). If the additional animal urging assembly is provided on the opposite door to the first animal urging assembly, the additional animal urging assembly is mirrored and inverted (i.e. rotated about its x-axis and y-axis compared to the animal urging assembly 22).

Whilst described in relation to use on an animal handling apparatus, such a guide assembly could be used elsewhere.

**In** some examples the engagement member 34 comprises a first portion 341 connected to the pivot 60, a bend 342 and a second portion 343 as illustrated in FIG. 5A. **In** some examples the bend 342 may be a different length, the angle of the bend may be different, and it may bend the opposite way. **In** some examples the first portion 341 is a different length. **In** some examples the second portion 343 is a different length.

**In** some examples the engagement member comprises a first portion connected to the pivot 60 and a chin scoop connected to the first portion.

When referring to the engagement member as extending at least generally downwardly, it may refer to any position where the engagement member is pointing downwards so that it does not protrude from the door 20 the assembly 22 is attached to into the gap between the doors 20.

When referring to the engagement member as extending at least generally transversely, it may refer to any position where the engagement member is pointing transversely so that at least part of the first portion 341 of the engagement member 34 connected to the pivot 60 protrudes from the door 20 the assembly 22 is attached to, into the gap between the doors 20.

When referring to the engagement member as extending at least generally transversely, and the engagement member comprises a first portion attached to the pivot and a chin scoop attached to the first portion, it may refer to any position where the engagement member is pointing transversely so that at least part of the surface of the chin scoop that the animal's head engages with protrudes from the door 20 the assembly 22 is attached to into the gap between the doors 20, so that the animal's head can rest in the chin scoop.

**In** some, but not necessarily all examples, in the in use position the engagement member points at least generally transversely so as to extend transversely to a greater extent compared to in the out of use position where the engagement member extends transversely to a lesser extent. **In** the out of use position, the engagement member extends to a lesser extent in the transverse dimension compared to when it is in the in use position, where it extends to a greater extent in the transverse dimension. **In** some, but not necessarily all examples, in the out of use position the engagement member extends transversely to a lesser extent in the positive transverse direction compared to when it is in the in use position, where it extends to a greater extent in the positive transverse direction. **In** this example, the positive transverse direction is parallel to the x axis of the assembly 22 and starts from the assembly 22 and points in the direction towards the gap between the doors 20.

## Claims

1. An animal urging assembly (22), the assembly including an engagement member (34) selectively engageable with an animal (12),
the assembly (22) being configured to selectively move the engagement member (34) between an out of use position wherein the engagement member (34) extends at least generally downwardly, to an in use position which is above the out of use position, and with the engagement member (34) extending at least generally transversely,
the assembly (22) being configured such that as it moves the engagement member (34) upwardly from the out of use position to the in use position, the engagement member (34) is automatically pivotally moved from extending generally downwardly to extending at least generally transversely,
wherein the assembly (22) comprises a pair of spaced guide members (40, 42), **characterized in that** the assembly additionally comprises guideway (38), **and in that** the guide members (40, 42) are selectively movable along the guideway (38) so as to move the engagement member (34) between the out of use and in use positions, such that as the guide members (40, 42) move between the out of use and in use positions, their relative alignment changes to cause the pivotal movement of the engagement member (34); wherein the assembly (22) is configured such that in the in use position the guide members (40, 42) are spaced at least generally one above the other, whilst in the out of use position the guide members (40, 42) are spaced at least generally transversely from each other.

2. An animal urging assembly (22) as claimed in claim 1, wherein the guideway (38) comprises an upward generally vertically aligned part and a lower part which also extends transversely;
wherein the guideway lower part is profiled and comprises a fulcrum part (54) in which a lower one (42) of the guide members (40, 42) can remain while the other upper guide member (40) pivotally moves therearound to cause at least part of the pivotal movement of the engagement member (34); wherein the guideway lower part comprises an upper surface against which the upper guide member (40) engages, and a lower surface against which the lower guide member (42) engages;
wherein the fulcrum part (54) is provided in the lower surface, and the guideway upper part (44) extends upwardly above the fulcrum part (54).

3. An animal urging assembly (22) as claimed in any preceding claim, wherein the assembly (22) additionally comprises a bracket member (30), wherein the engagement member (34) extends from the bracket member (30); wherein the assembly (22) comprises a single movement provider connected to the bracket member (30), wherein the single movement provider is configured to provide the movement that causes the engagement member (34) to move upwardly out of the out of use position and causes the engagement member (34) to automatically pivotally move from extending at least generally downwardly to extending at least generally transversely to be in the in use position;
wherein the movement provider is in the form of a hydraulic cylinder (26);
wherein the movement provider is configured to move substantially just in a vertical direction.

4. An animal urging assembly (22) as claimed in any preceding claim, wherein the assembly (22) additionally comprises a pivot (60), wherein the engagement member (34) connects to the pivot (60);
wherein the assembly additionally comprises a guide element, wherein the guide members (40, 42) are provided on the guide element;
wherein the guide element is connected to the pivot (60); wherein the engagement member (34), pivot (60) and guide element are arranged to rotate together.

5. An animal urging assembly (22) as claimed in claim 4, when dependent upon claim 3, wherein the engagement member (34), pivot (60) and guide element are arranged to rotate relative to the bracket member (30); and
wherein the bracket member (30) is arranged to only move in a substantially vertical direction.

6. An animal urging assembly (22) as claimed in any preceding claim, when dependent upon claim 4, wherein the assembly comprises a vertical slot (37);
wherein the vertical slot (37) is configured to receive part of the pivot (60) to guide the pivot (60) when it moves vertically.

7. An animal urging assembly (22) as claimed in claim 6, wherein the assembly (22) comprises a front plate (56) and a back plate (58); wherein the back plate (58) comprises the guideway (38); wherein the front plate (56) comprises the vertical slot (37).

8. An animal urging assembly (22) as claimed in 6, when dependent upon claim 2, wherein the pivot (60) is offset from the guide members (40, 42) to enable the guide members (40, 42) to move transversely in the lower part of the guideway (38) whilst the pivot (60) moves vertically in the vertical slot (37).

9. An animal urging assembly (22) as claimed in any preceding claim when dependent upon claims 3 and 4, wherein the assembly (22) is arranged so that the engagement member (34) simultaneously rotates and moves vertically during at least part of the vertical movement of the engagement member (34) and pivot provided by the movement provider.

10. An animal urging assembly (22) as claimed in any preceding claim when dependent upon claim 3, wherein the assembly (22) is arranged so that the vertical movement of the movement provider is translated into vertical and rotational movement of the engagement member (34).

11. An animal urging assembly (22) as claimed in any preceding claim, wherein the guide members (40, 42) are in the form of rotatable members; wherein the rotatable members are wheels, movable along the guideway (38).

12. An animal handling apparatus (10) comprising an openable door arrangement at one end, an animal urging assembly (22) according to any of the preceding claims mounted on the openable door arrangement, such that the engagement member (34) is extendible when in an in use position across a gap provided when the openable door arrangement is partially closed; wherein the animal urging assembly (22) is provided on the outside of the door arrangement; wherein the door arrangement comprises a pair of doors; wherein the pair of doors are slidably movable; wherein the animal urging assembly (22) is provided on the outside of a one of the doors, and the animal urging assembly (22) is configured not to extend transversely from the door when in the out of use position.

13. An animal handling apparatus (10) as claimed in claim 12, wherein the animal handling apparatus (10) comprises an additional animal urging assembly according to any of claims 1 to 11 mounted on the openable door arrangement, such that the engagement member (34) of the additional animal urging assembly is extendible when in an in use position across the gap provided when the openable door arrangement is partially closed, wherein the engagement member (34) of the animal urging apparatus (22) is configured to engage an animal's head/neck from below when in the in use position and the engagement member (34) of the additional animal urging apparatus is configured to engage the animal's head/neck from above when in the in use position.

## Patentansprüche

1. Tierfixierungsbaugruppe (22), wobei die Baugruppe ein Eingriffselement (34) enthält, das selektiv mit einem Tier (12) in Eingriff bringbar ist,
wobei die Baugruppe (22) dazu konfiguriert ist, das Eingriffselement (34) selektiv zwischen einer Position außer Gebrauch, in der sich das Eingriffselement (34) mindestens im Allgemeinen nach unten erstreckt, zu einer Position in Gebrauch zu bewegen, die sich oberhalb der Position außer Gebrauch befindet, und wobei sich das Eingriffselement (34) mindestens im Allgemeinen in Querrichtung erstreckt,
wobei die Baugruppe (22) so konfiguriert ist, dass, wenn sie das Eingriffselement (34) von der Position außer Gebrauch nach oben in die Position in Gebrauch bewegt, das Eingriffselement (34) automatisch schwenkend von einer Erstreckung im Allgemeinen nach unten zu einer Erstreckung im Wesentlichen in Querrichtung bewegt wird,
wobei die Baugruppe (22) ein Paar beabstandeter Führungselemente (40, 42) umfasst,
**dadurch gekennzeichnet, dass** die Baugruppe zusätzlich eine Führungsbahn (38) umfasst, und dadurch, dass die Führungselemente (40, 42) entlang der Führungsbahn (38) selektiv bewegbar sind, um das Eingriffselement (34) zwischen der Position außer Gebrauch und der Position in Gebrauch zu bewegen, sodass sich, wenn sich die Führungselemente (40, 42) zwischen der Position außer Gebrauch und der Position in Gebrauch bewegen, ihre relative Ausrichtung ändert, um die Schwenkbewegung des Eingriffselements (34) zu bewirken;
wobei die Baugruppe (22) so konfiguriert ist, dass die Führungselemente (40, 42) in der Position in Gebrauch mindestens im Allgemeinen übereinander beabstandet sind, während die Führungselemente (40, 42) in der Position außer Gebrauch mindestens im Allgemeinen in Querrichtung voneinander beabstandet sind.

2. Tierfixierungsbaugruppe (22) nach Anspruch 1, wobei die Führungsbahn (38) einen nach oben gerichteten, im Allgemeinen vertikal ausgerichteten Teil und einen unteren Teil umfasst, der sich auch in Querrichtung erstreckt;
wobei der untere Teil der Führungsbahn profiliert ist und einen Drehpunktteil (54) umfasst, in dem ein unteres (42) der Führungselemente (40, 42) verbleiben kann, während sich das andere obere Führungselement (40) schwenkend darum bewegt, um mindestens einen Teil der Schwenkbewegung des Eingriffselements (34) zu bewirken; wobei der untere Teil der Führungsbahn eine obere Oberfläche, an der das obere Führungselement (40) eingreift, und eine untere Oberfläche, an der das untere Führungselement (42) eingreift, umfasst;
wobei der Drehpunktteil (54) in der unteren Oberfläche bereitgestellt ist und sich der obere Teil der Führungsbahn (44) nach oben über den Drehpunktteil (54) erstreckt.

3. Tierfixierungsbaugruppe (22) nach einem vorhergehenden Anspruch, wobei die Baugruppe (22) zusätzlich ein Halterungselement (30) umfasst, wobei sich das Eingriffselement (34) von dem Halterungselement (30) erstreckt; wobei die Baugruppe (22) einen einzelnen Bewegungsbereitsteller umfasst, der mit dem Halterungselement (30) verbunden ist, wobei der einzelne Bewegungsbereitsteller dazu konfiguriert ist, die Bewegung bereitzustellen, die bewirkt, dass sich das Eingriffselement (34) nach oben aus der Position außer Gebrauch bewegt, und bewirkt, dass sich das Eingriffselement (34) automatisch schwenkend von einer Erstreckung im Wesentlichen nach unten zu einer Erstreckung im Wesentlichen in Querrichtung bewegt, um sich in der Position in Gebrauch zu befinden.
wobei der Bewegungsbereitsteller in der Form eines Hydraulikzylinders (26) vorliegt; wobei der Bewegungsbereitsteller dazu konfiguriert ist, sich im Wesentlichen nur in einer vertikalen Richtung zu bewegen.

4. Tierfixierungsbaugruppe (22) nach einem vorhergehenden Anspruch, wobei die Baugruppe (22) zusätzlich einen Schwenkzapfen (60) umfasst, wobei das Eingriffselement (34) mit dem Schwenkzapfen (60) verbunden ist;
wobei die Baugruppe zusätzlich eine Führungskomponente umfasst, wobei die Führungselemente (40, 42) an der Führungskomponente bereitgestellt sind;
wobei die Führungskomponente mit dem Schwenkzapfen (60) verbunden ist; wobei das Eingriffselement (34), der Schwenkzapfen (60) und die Führungskomponente so angeordnet sind, dass sie sich gemeinsam drehen.

5. Tierfixierungsbaugruppe (22) nach Anspruch 4, wenn abhängig von Anspruch 3, wobei das Eingriffselement (34), der Schwenkzapfen (60) und die Führungskomponente so angeordnet sind, dass sie sich relativ zu dem Halterungselement (30) drehen; und
wobei das Halterungselement (30) dazu angeordnet ist, sich nur in einer im Wesentlichen vertikalen Richtung zu bewegen.

6. Tierfixierungsbaugruppe (22) nach einem vorhergehenden Anspruch, wenn abhängig von Anspruch 4, wobei die Baugruppe einen vertikalen Schlitz (37) umfasst;
wobei der vertikale Schlitz (37) dazu konfiguriert ist, einen Teil des Schwenkzapfens (60) aufzunehmen, um den Schwenkzapfen (60) zu führen, wenn er sich vertikal bewegt.

7. Tierfixierungsbaugruppe (22) nach Anspruch 6, wobei die Baugruppe (22) eine vordere Platte (56) und eine hintere Platte (58) umfasst; wobei die hintere Platte (58) die Führungsbahn (38) umfasst; wobei die vordere Platte (56) den vertikalen Schlitz (37) umfasst.

8. Tierfixierungsbaugruppe (22) nach Anspruch 6, wenn abhängig von Anspruch 2, wobei der Schwenkzapfen (60) von den Führungselementen (40, 42) versetzt ist, um es den Führungselementen (40, 42) zu ermöglichen, sich in dem unteren Teil der Führungsbahn (38) in Querrichtung zu bewegen, während sich der Schwenkzapfen (60) in dem vertikalen Schlitz (37) vertikal bewegt.

9. Tierfixierungsbaugruppe (22) nach einem vorhergehenden Anspruch, wenn abhängig von den Ansprüchen 3 und 4, wobei die Baugruppe (22) so angeordnet ist, dass sich das Eingriffselement (34) während mindestens eines Teils der vertikalen Bewegung des Eingriffselements (34) und des Schwenkzapfens, die durch den Bewegungsbereitsteller bereitgestellt wird, gleichzeitig dreht und vertikal bewegt.

10. Tierfixierungsbaugruppe (22) nach einem vorhergehenden Anspruch, wenn abhängig von Anspruch 3, wobei die Baugruppe (22) so angeordnet ist, dass die vertikale Bewegung des Bewegungsbereitstellers in eine vertikale und eine Drehbewegung des Eingriffselements (34) übersetzt wird.

11. Tierfixierungsbaugruppe (22) nach einem vorhergehenden Anspruch, wobei die Führungselemente (40, 42) in Form von drehbaren Elementen vorliegen; wobei die drehbaren Elemente Räder sind, die entlang der Führungsbahn (38) bewegbar sind.

12. Tierhandhabungsvorrichtung (10), umfassend eine öffenbare Türanordnung an einem Ende, eine Tierfixierungsbaugruppe (22) nach einem der vorhergehenden Ansprüche, die an der öffenbaren Türanordnung montiert ist, sodass das Eingriffselement (34) in einer Position in Gebrauch über einen Spalt ausfahrbar ist, der bereitgestellt ist, wenn die öffenbare Türanordnung teilweise geschlossen ist; wobei die Tierfixierungsbaugruppe (22) an der Außenseite der Türanordnung bereitgestellt ist; wobei die Türanordnung ein Paar Türen umfasst; wobei das Paar Türen verschiebbar bewegbar ist; wobei die Tierfixierungsbaugruppe (22) an der Außenseite einer der Türen bereitgestellt ist und die Tierfixierungsbaugruppe (22) dazu konfiguriert ist, sich nicht in Querrichtung von der Tür zu erstrecken, wenn sie sich in der Position außer Gebrauch befindet.

13. Tierhandhabungsvorrichtung (10) nach Anspruch 12, wobei die Tierhandhabungsvorrichtung (10) eine zusätzliche Tierfixierungsbaugruppe nach einem der Ansprüche 1 bis 11 umfasst, die an der öffenbaren Türanordnung montiert ist, sodass das Eingriffselement (34) der zusätzlichen Tierfixierungsbaugruppe in einer Position in Gebrauch über den Spalt ausfahrbar ist, der bereitgestellt ist, wenn die öffenbare Türanordnung teilweise geschlossen ist, wobei das Eingriffselement (34) der Tierfixierungsvorrichtung (22) dazu konfiguriert ist, in der Position in Gebrauch mit dem Kopf/Hals eines Tieres von unten in Eingriff zu treten, und das Eingriffselement (34) der zusätzlichen Tierfixierungsvorrichtung dazu konfiguriert ist, in der Position in Gebrauch mit dem Kopf/Hals des Tieres von oben in Eingriff zu treten.

## Revendications

1. Ensemble de poussée d'animal (22), l'ensemble comprenant un élément de mise en prise (34) pouvant être mis en prise sélectivement avec un animal (12),
l'ensemble (22) étant conçu pour déplacer sélectivement l'élément de mise en prise (34) entre une position de non-utilisation dans laquelle l'élément de mise en prise (34) s'étend au moins globalement vers le bas, et une position d'utilisation qui est au-dessus de la position de non-utilisation, et avec l'élément de mise en prise (34) s'étendant au moins globalement transversalement,
l'ensemble (22) étant conçu de telle sorte que lorsqu'il déplace l'élément de mise en prise (34) vers le haut, de la position de non-utilisation à la position d'utilisation, l'élément de mise en prise (34) soit automatiquement déplacé de manière pivotante de l'extension globalement vers le bas vers l'extension au moins globalement transversalement,
dans lequel l'ensemble (22) comprend une paire d'éléments de guidage espacés (40, 42), **caractérisé en ce que** l'ensemble comprend en outre un passage de guidage (38), et **en ce que** les éléments de guidage (40, 42) sont mobiles sélectivement le long du passage de guidage (38) de manière à déplacer l'élément de mise en prise (34) entre les positions de non-utilisation et d'utilisation, de telle sorte que lorsque les éléments de guidage (40, 42) se déplacent entre les positions de non-utilisation et d'utilisation, leur alignement relatif change pour provoquer le mouvement pivotant de l'élément de mise en prise (34) ;
dans lequel l'ensemble (22) est configuré de telle sorte que dans la position d'utilisation, les éléments de guidage (40, 42) soient espacés au moins globalement les uns au-dessus des autres, tandis que dans la position de non-utilisation, les éléments de guidage (40, 42) soient espacés au moins globalement transversalement les uns par rapport aux autres.

2. Ensemble de poussée d'animal (22) selon la revendication 1, dans lequel le passage de guidage (38) comprend une partie montante alignée globalement verticalement et une partie inférieure qui s'étend également transversalement ;
dans lequel la partie inférieure du passage de guidage est profilée et comprend une partie de point d'appui (54) dans laquelle un élément inférieur (42) des éléments de guidage (40, 42) peut rester tandis que l'autre élément de guidage supérieur (40) se déplace de manière pivotante autour de celui-ci pour provoquer au moins une partie du mouvement pivotant de l'élément de mise en prise (34) ; dans lequel la partie inférieure du passage de guidage comprend une surface supérieure contre laquelle l'élément de guidage supérieur (40) vient en prise, et une surface inférieure contre laquelle l'élément de guidage inférieur (42) vient en prise ;
dans lequel la partie de point d'appui (54) est prévue dans la surface inférieure, et la partie supérieure de passage de guidage (44) s'étend vers le haut au-dessus de la partie de point d'appui (54).

3. Ensemble de poussée d'animal (22) selon l'une quelconque des revendications précédentes, dans lequel l'ensemble (22) comprend en outre un élément de support (30), dans lequel l'élément de mise en prise (34) s'étend à partir de l'élément de support (30) ; dans lequel l'ensemble (22) comprend un dispositif de transmission de mouvement unique connecté à l'élément de support (30), dans lequel le dispositif de transmission de mouvement unique est conçu pour transmettre le mouvement qui amène l'élément de mise en prise (34) à se déplacer vers le haut hors de la position de non-utilisation et amène l'élément de mise en prise (34) à se déplacer automatiquement de manière pivotante de l'extension au moins globalement vers le bas vers l'extension au moins globalement transversalement pour être dans la position d'utilisation ;
dans lequel le dispositif de transmission de mouvement se présente sous la forme d'un vérin hydraulique (26) ;
dans lequel le dispositif de transmission de mouvement est conçu pour se déplacer sensiblement uniquement dans une direction verticale.

4. Ensemble de poussée d'animal (22) selon l'une quelconque des revendications précédentes, dans lequel l'ensemble (22) comprend en outre un pivot (60), dans lequel l'élément de mise en prise (34) se connecte au pivot (60) ;
dans lequel l'ensemble comprend en outre un élément de guidage, dans lequel les éléments de guidage (40, 42) sont prévus sur l'élément de guidage ;
dans lequel l'élément de guidage est connecté au pivot (60) ; dans lequel l'élément de mise en prise (34), le pivot (60) et l'élément de guidage sont agencés pour tourner ensemble.

5. Ensemble de poussée d'animal (22) selon la revendication 4, lorsqu'elle dépend de la revendication 3, dans lequel l'élément de mise en prise (34), le pivot (60) et l'élément de guidage sont agencés pour tourner par rapport à l'élément de support (30) ; et
dans lequel l'élément de support (30) est agencé pour se déplacer uniquement dans une direction sensiblement verticale.

6. Ensemble de poussée d'animal (22) selon l'une quelconque des revendications précédentes, lorsqu'elle dépend de la revendication 4, dans lequel l'ensemble comprend une fente verticale (37) ; dans lequel la fente verticale (37) est configurée pour recevoir une partie du pivot (60) pour guider le pivot (60) lorsqu'il se déplace verticalement.

7. Ensemble de poussée d'animal (22) selon la revendication 6, dans lequel l'ensemble (22) comprend une plaque avant (56) et une plaque arrière (58) ; dans lequel la plaque arrière (58) comprend le passage de guidage (38) ; dans lequel la plaque avant (56) comprend la fente verticale (37).

8. Ensemble de poussée d'animal (22) selon la revendication 6, lorsqu'elle dépend de la revendication 2, dans lequel le pivot (60) est décalé par rapport aux éléments de guidage (40, 42) pour permettre aux éléments de guidage (40, 42) de se déplacer transversalement dans la partie inférieure du passage de guidage (38) tandis que le pivot (60) se déplace verticalement dans la fente verticale (37).

9. Ensemble de poussée d'animal (22) selon l'une quelconque des revendications précédentes lorsqu'elles dépendent des revendications 3 et 4, dans lequel l'ensemble (22) est agencé de sorte que l'élément de mise en prise (34) tourne et se déplace simultanément verticalement pendant au moins une partie du mouvement vertical de l'élément de mise en prise (34) et du pivot transmis par le dispositif de transmission de mouvement.

10. Ensemble de poussée d'animal (22) selon l'une quelconque des revendications précédentes lorsqu'elles dépendent de la revendication 3, dans lequel l'ensemble (22) est agencé de sorte que le mouvement vertical du dispositif de transmission de mouvement soit traduit en mouvement vertical et rotatif de l'élément de mise en prise (34).

11. Ensemble de poussée d'animal (22) selon l'une quelconque des revendications précédentes, dans lequel les éléments de guidage (40, 42) se présentent sous la forme d'éléments rotatifs ; dans lequel les éléments rotatifs sont des roues, mobiles le long du passage de guidage (38).

12. Appareil de manipulation d'animal (10) comprenant un agencement de porte ouvrable à une extrémité, un ensemble de poussée d'animal (22) selon l'une quelconque des revendications précédentes monté sur l'agencement de porte ouvrable, de sorte que l'élément de mise en prise (34) soit extensible lorsqu'il est dans une position d'utilisation à travers un espace prévu lorsque l'agencement de porte ouvrable est partiellement fermé ; dans lequel l'ensemble de poussée d'animal (22) est prévu sur l'extérieur de l'agencement de porte ; dans lequel l'agencement de porte comprend une paire de portes ; dans lequel la paire de portes sont mobiles de manière coulissante ;
dans lequel l'ensemble de poussée d'animal (22) est prévu sur l'extérieur de l'une des portes, et l'ensemble de poussée d'animal (22) est conçu pour ne pas s'étendre transversalement à partir de la porte lorsqu'il est dans la position de non-utilisation.

13. Appareil de manipulation d'animal (10) selon la revendication 12, dans lequel l'appareil de manipulation d'animal (10) comprend un ensemble de poussée d'animal supplémentaire selon l'une quelconque des revendications 1 à 11 monté sur l'agencement de porte ouvrable, de sorte que l'élément de mise en prise (34) de l'ensemble de poussée d'animal supplémentaire soit extensible lorsqu'il est dans une position d'utilisation à travers l'espace prévu lorsque l'agencement de porte ouvrable est partiellement fermé, dans lequel l'élément de mise en prise (34) de l'appareil de poussée d'animal (22) est conçu pour mettre en prise la tête/le cou d'un animal par le bas lorsqu'il est dans la position d'utilisation et l'élément de mise en prise (34) de l'appareil de poussée d'animal supplémentaire est conçu pour mettre en prise la tête/le cou de l'animal par le haut lorsqu'il est dans la position d'utilisation.
